# EUROPEAN PATENT APPLICATION

(11) **EP 3 862 117 A1**
(43) Date of publication of application: **11.08.2021**
(21) Application number: 21153992.9
(22) Date of filing: 28.01.2021
(51) Int. Cl.: B23B 27/20

(54) **CUTTING TOOL**

(30) Priority: 07.02.2020 JP 2020020113; 30.11.2020 JP 2020198714
(71) Applicant: UNION TOOL CO., Tokyo (JP)
(72) Inventor: OHORI, Tetsutaro, Tokyo, Shinagawa (JP)
(74) Representative: Kramer Barske Schmidtchen Patentanwälte PartG mbB

(57) **Abstract**

It is an object of the present invention to provide a cutting tool in which excellent electrical conductivity between a tool substrate and a workpiece can be realized even when the tool substrate is clad with a diamond film, and with which it is possible to precisely control the hole boring depth or precisely sense breakage by using the electrical conductivity. An electroconductive film (3) is provided to a diamond film (2) at a site that will make contact with a workpiece or around the site so as to conduct electricity with a tool substrate (1).

## Description

### TECHNICAL FIELD

The present invention relates to a cutting tool, and in particular relates to a diamond-clad cutting tool in which a tool substrate is clad with a diamond film.

### BACKGROUND ART

In recent years, advancements have been made in reducing the size, weight, and thickness of printed circuit boards (PCBs), and there has been a demand for increases in heat resistance, heat dissipation properties, and rigidity in association with increases in required electrical reliability. In order to satisfy these requirements, attempts have been made to increase the inorganic filler content and glass fiber density of glass-fiber reinforced plastics (GFRPs), which are materials that constitute printed circuit boards.

However, when the amount of inorganic filler or the amount of glass fiber in printed circuit boards increases, cutting blades of printed circuit board drills (referred to as "PCB drills" below), which are used to bore holes in the printed circuit boards, are more readily worn down. When the cutting blades of a PCB drill wear down, adverse events occur in terms of worsening of the precision of hole positions, worsening of roughness of an inner wall surface, breakage of the PCB drill, etc.

Accordingly, PCB drills are normally formed so that a tool substrate is clad with various coating films in order to suppress wear of the cutting blades, prevent any reduction in processed-hole quality associated with wear of the cutting blades, and enhance tool service life (see Patent Document 1, etc.).

Processing equipment used to bore holes in printed circuit boards (e.g., NC drill presses) may be provided with a function in which contact between the tip end of a PCB drill and a copper foil layer on the surface of a printed circuit board is electrically sensed (electrical conductivity between the tip end of the PCB drill and the copper foil layer on the surface of the printed circuit board is sensed), whereby the position of contact between the tip end of the PCB drill and the surface of the printed circuit board is detected and used as a hole boring reference position of the PCB drill, and the hole boring depth is controlled on the basis of the hole boring reference position. Such processing equipment may be provided with a breakage-sensing function for judging that the tip end of the PCB drill has broken in cases where contact between the tip end of the PCB drill and the copper foil layer on the surface of the printed circuit board cannot be electrically sensed.

Among coating films with which PCB drills are clad, there are films such as diamond films that have high electrical resistance and are not readily conductive electrically. Because current flows less readily in drills clad with such films than in drills that are not clad with coating films (non-coated drills), there are cases where it has been difficult or impossible to electrically sense contact between the tip end of the PCB drill and the copper foil layer on the surface of the printed circuit board. In such cases, adverse events could occur in that the depth of bored holes is not satisfactorily controlled and the hole boring depth (processing depth or distance from the surface of the printed circuit board) cannot be precisely managed, or in that erroneous sensing occurs in the breakage-sensing function of the PCB drill and the hole-boring process is interrupted.

Patent Document 2, for example, discloses a technique for adding boron (B) to a polycrystalline diamond film to thereby impart electroconductivity to the diamond film, but it is known that in this case the adhesiveness between the polycrystalline diamond film and the cemented carbide that is the tool substrate decreases due to an increase in internal stress (see Patent Document 3).

### [Prior Art Documents]

[Patent Document 1] Domestic Republication No. 2009-544481
[Patent Document 2] Japanese Laid-open Patent Application No. 2006-152424
[Patent Document 3] International Publication No. 2013/105348

### DISCLOSURE OF THE INVENTION

### PROBLEMS TO BE SOLVED BY THE INVENTION

As described above, the conventional technique of adding boron (B) to a diamond film to thereby impart electroconductivity to the film raises a concern pertaining to reduction in adhesiveness due to internal stress of the film, and this conventional technique is not a sufficient strategy for solving the problem.

The present invention was contrived in view of such circumstances, it being an object of the present invention to provide a cutting tool in which excellent electrical conductivity between a tool substrate and a workpiece can be realized even when the tool substrate is clad with a diamond film, and with which it is possible to precisely control the hole boring depth or precisely sense breakage by using the electrical conductivity.

### MEANS FOR SOLVING THE PROBLEM

The main points of the present invention are described below with reference to the accompanying drawings.

The invention according to a first aspect pertains to a cutting tool in which an electroconductive tool substrate 1 is clad with a diamond film 2, wherein the cutting tool is characterized in that an electroconductive film 3 is provided to the diamond film 2 at a site that will make contact with a workpiece or around the site so as to conduct electricity with the tool substrate 1.

The invention according to a second aspect pertains to the cutting tool according to the first aspect, wherein the cutting tool is characterized in that the electroconductive film 3 is provided so as to cover the diamond film 2.

The invention according to a third aspect pertains to the cutting tool according to either of the first and second aspects, wherein the cutting tool is characterized in that the electroconductive film 3 is provided directly on the diamond film 2 so as to cover the diamond film 2.

The invention according to a fourth aspect pertains to the cutting tool according to any of the first to third aspects, wherein the cutting tool is characterized in that the electroconductive film 3 is provided so as to cover the diamond film 2 and the tool substrate 1.

The invention according to a fifth aspect pertains to the cutting tool according to any of the first to fourth aspects, wherein the cutting tool is characterized in that the electroconductive film 3 is a single metal selected from the group consisting of Al and metal elements belonging to groups 4, 5, 6, 10, and 11 of the periodic table, or is an alloy having, as a main component, one or two types of metal elements selected from the aforementioned group.

The invention according to a sixth aspect pertains to the cutting tool according to the fifth aspect, wherein the cutting tool is characterized in that the electroconductive film 3 is any of Ti, Cr, or Al as a single metal, or is an alloy having, as a main component, any one or two types among Ti, Cr, and Al.

The invention according to a seventh aspect pertains to the cutting tool according to the sixth aspect, wherein the cutting tool is characterized in that the electroconductive film 3 is formed from Cr or Al as a single metal, or from an alloy of Cr and Al.

The invention according to an eighth aspect pertains to the cutting tool according to the seventh aspect, wherein the cutting tool is characterized in that the electroconductive film 3 is Al as a single metal, or is an alloy represented by the following compositional expression.
Cr₍₁₀₀₋ₓ₎Al₍ₓ₎ (where 50 ≤ x < 100, and x is in units of at.%)

The invention according to a ninth aspect pertains to the cutting tool according to any of the first to eighth aspects, wherein the cutting tool is characterized in that the film thickness of the diamond film 2 is set to 3-25 µm, inclusive.

The invention according to a tenth aspect pertains to the cutting tool according to any of the first to ninth aspects, wherein the cutting tool is characterized in that the film thickness of the electroconductive film 3 on the diamond film 2 is set to 0.005-3 µm, inclusive.

The invention according to an eleventh aspect pertains to the cutting tool according to any of the first to tenth aspects, wherein the cutting tool is characterized in that the tool substrate 1 is made of cemented carbide, and the workpiece is a printed circuit board.

The invention according to a twelfth aspect pertains to the cutting tool according to any of the first to eleventh aspects, wherein the cutting tool is characterized by performing a process to bore a hole in a printed circuit board.

### EFFECT OF THE INVENTION

Due to being configured in the manner described above, the present invention provides a cutting tool in which it is possible to electrically sense, in a satisfactory manner, contact between the tool substrate and the workpiece despite the tool substrate being configured to be clad with a diamond film, and with which it is possible to precisely control the hole boring depth or precisely sense breakage.

### BRIEF DESCRIPTION OF THE DRAWINGS

FIG. 1 is a schematic explanatory drawing showing the present example;
FIG. 2 is an explanatory cross-sectional drawing of the A portion in FIG. 1;
FIG. 3 is a table showing film conditions for films on PCB drills, and evaluation results, in the present experiment;
FIG. 4 is a graph in which the evaluation results in the present experiment are aggregated for each film condition;
FIG. 5 is a graph showing performance (number of instances of a hole processing operation) relative to Al content when a CrAl alloy is used in an electroconductive film;
FIG. 6 is a schematic explanatory drawing showing other examples of the present example; and
FIG. 7 is a table showing the ratio of processed-hole depth or recessed-step length to groove length, and evaluation results, in the present experiment.

### BEST MODE FOR CARRYING OUT THE INVENTION

Preferred embodiments of the present invention are straightforwardly described below indicating the actions of the present invention on the basis of the drawings.

According to the present invention, an electroconductive tool substrate 1 is clad with a diamond film 2, and an electroconductive film 3 is furthermore provided to the diamond film 2 at a site that will make contact with a workpiece or around the site so as to conduct electricity with the tool substrate 1. Therefore, when the present invention is applied, e.g., to a PCB drill, it is possible to electrically sense contact between the present invention and a copper foil layer on the surface of a printed circuit board.

Therefore, even though the present invention is configured so that the tool substrate 1 is clad with the diamond film 2, the present invention can be used in processing equipment provided with a hole-boring-depth control function for precisely managing hole boring depth (processing depth or distance from the surface of the printed circuit board) using electrical conductivity, and/or a breakage-sensing function for sensing whether the PCB drill has broken during processing by using electrical conductivity.

### [Examples]

A specific example of the present invention is described below with reference to the drawings.

The present example illustrates a case where the cutting tool of the present invention is applied to a PCB drill.

Specifically, the present example provides a PCB drill in which an electroconductive tool substrate 1 is clad with a diamond film 2, and an electroconductive film 3 is furthermore provided to the diamond film 2 at a site that will make contact with a workpiece or around the site so as to conduct electricity with the tool substrate 1, the PCB drill being configured so that contact with a copper foil layer on the surface of a printed circuit board can be electrically sensed even in a configuration in which the tool substrate 1 is clad with a diamond film 2 that does not readily conduct electricity, and so that the PCB drill can be used in processing equipment (e.g., NC drill presses) provided with a breakage-sensing function for judging that the tip end of the drill has broken when contact between the tip end of the drill and the copper foil layer on the surface of the printed circuit board cannot be electrically sensed.

Constituent parts according to the present example are described in detail below.

The tool substrate 1 in the present example is made of electroconductive cemented carbide, and specifically is made of cemented carbide formed from tungsten carbide (WC) and cobalt (Co).

The diamond film 2 with which the tool substrate 1 is clad is formed directly on the tool substrate 1 in a prescribed region at a prescribed film thickness through chemical vapor deposition.

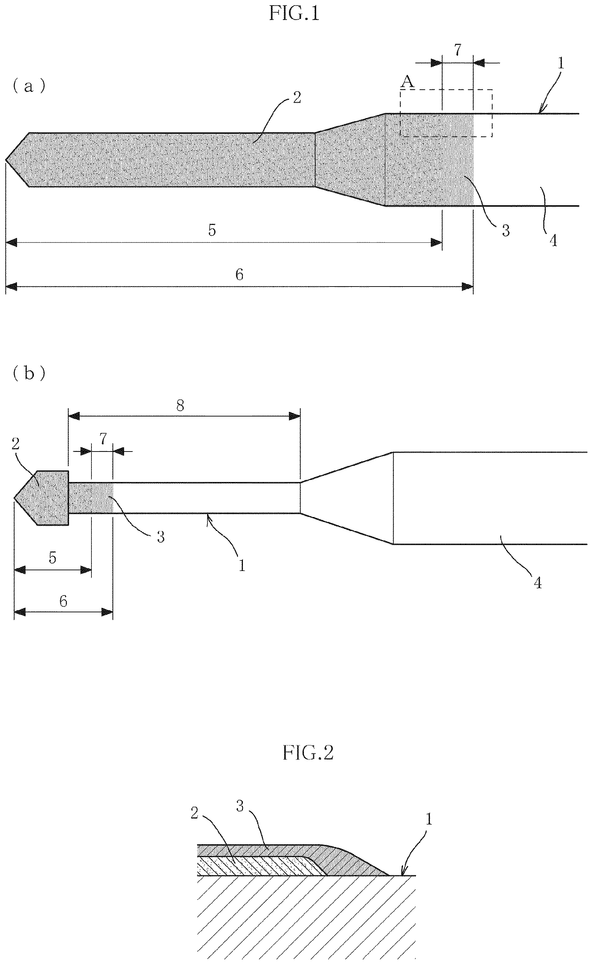

Specifically, in the present example, the diamond film 2 is formed in a region (referred to as a diamond-film-clad-region part 5 below) that reaches from the tip end of the drill (tip end of the tool substrate 1) to the tip-end side of a shank part 4 (portion connected to a tool attachment part of a printed-circuit-board processing device) positioned at the base end part of the drill (base end part of the tool substrate 1), as shown in FIG. 1(a).

If the film thickness of the diamond film 2 is too low, wear resistance will not be achieved and performance as a PCB drill (cutting tool) will be insufficient. Conversely, if the film thickness of the diamond film 2 is too great, a reduction in processing quality could occur, such as an increase in cutting resistance and shortening of breakage service life due to rounding of the edge of the cutting blade, or ruining of the inner wall surface of a processed hole due to a reduction in sharpness with respect to the workpiece, and production of burrs at the copper foil layer. Therefore, in order for such events to be avoided, the diamond film 2 is provided at a film thickness of 3-25 µm, inclusive, in the present example.

The diamond film 2 may have a single-layer configuration or a multilayer configuration (a configuration in which a plurality of layers having different crystal sizes are formed).

In the present example, the electroconductive film 3 is provided directly on the diamond film 2, with which the tool substrate 1 is clad, at a site that will make contact with the workpiece (printed circuit board) or around the site so as to cover the diamond film 2 and conduct electricity with the tool substrate 1.

Specifically, in the present example, the electroconductive film 3 is formed in a region (referred to as an electroconductive-film-clad-region part 6 below) that covers the diamond-film-clad-region part 5 and reaches to the shank part 4, at which the tool substrate 1 adjacent to the diamond-film-clad-region part 5 is exposed, as shown in FIG. 1 (a) .

Specifically, in the present example, the electroconductive film 3 (electroconductive-film-clad-region part 6) is provided so as to extend further toward the base end of the drill than does the diamond film 2 (diamond-film-clad-region part 5), whereby an electricity-conducting-region part 7 is formed at which the electroconductive film 3 is directly in contact with the cemented-carbide tool substrate 1, and a configuration is adopted so that the tool substrate 1 and the electroconductive film 3 with which the diamond film 2 is clad conduct electricity in a satisfactory manner in the electricity-conducting-region part 7.

The electroconductive film 3 in the present example is formed from a single metal, or from an alloy including at least two metal elements. The electroconductive film 3 may be configured so that unavoidable impurity elements are included, and may have a single-layer configuration or a multilayer configuration. In the case of a multilayer configuration, if a film formed from a single metal or from an alloy including at least two metal elements is formed directly on the diamond film 2, and if adhesiveness with respect to the diamond film 2 is ensured, then films having any composition may be used in other layers, provided that electrical conductivity can be ensured.

The electroconductive layer 3 is preferably formed from a metal or alloy in which an anchor effect is readily obtained with respect to the diamond film 2 and which has high ductility. This makes it possible to improve adhesiveness with respect to the diamond film 2.

To describe the electroconductive film 3 in the present example in further detail, the electroconductive film 3 in the present example is formed from a single metal selected from the group consisting of Al and metal elements belonging to groups 4, 5, 6, 10, and 11 of the periodic table, or is an alloy having, as a main component, one or two types of metal elements selected from the aforementioned group.

Forming the film from any of Ti, Cr, or Al as a single metal, or forming the film from an alloy having, as a main component, any one or two types among Ti, Cr, and Al, among the single metals and alloys described above, yields excellent adhesiveness with the diamond film 2 and makes separation less likely to occur during a cutting process.

Furthermore, forming the film from Cr or Al as a single metal, or from an alloy of Cr and Al, yields exceptional performance in terms of durability as well. In particular, forming the film from Al as a single metal, or forming the film from an alloy of Cr and Al that is represented by the following compositional expression, yields extremely exceptional performance.
Cr₍₁₀₀₋ₓ₎Al₍ₓ₎ (where 50 ≤ x < 100, and x is in units of at.%)

If the film thickness of the electroconductive film 3 (film thickness of the electroconductive film 3 on the diamond film 2) is too low, electroconductivity cannot be sufficiently ensured. Conversely, if the film thickness of the electroconductive film 3 is too great, the films could be more susceptible to separation due to internal stress of the electroconductive film 3. Therefore, in order for such events to be avoided, the electroconductive film 3 is set to a film thickness of 0.005-3 µm, inclusive, in the present example.

In the present example, in order to reduce cutting resistance and reduce the contact area between a processing hole wall surface and a drill outer-peripheral part, as shown in FIG. 1(b), the PCB drill may be configured as a so-called undercut drill in which an undercut part 8 having a further reduced diameter is provided at a position closer to the base-end side than is the tip end part of the PCB drill. When the PCB drill is configured as an undercut drill, it is not necessary to adopt a configuration in which the diamond-film-clad-region part 5 is provided extending to the shank part 4; rather, the diamond-film-clad-region part 5 is to be provided from the tip end of the drill to an appropriate position of the undercut part 8 having a lowest-limit diameter. In this case, the electroconductive film 3 may be provided so that the electricity-conducting-region part 7 can be ensured by the undercut part 8, and the electroconductive film 3 can be set to a discretionary configuration, provided that electrical conductivity can be ensured.

In the present example, for the same purpose as that for the undercut drill, the tool substrate 1 may be configured so that a chip discharge groove 10 is provided from the tip end of the tool toward the base-end side, and so that a concave groove or a recessed step surface 11 to which the electroconductive film 3 is provided is formed along the chip discharge groove 10.

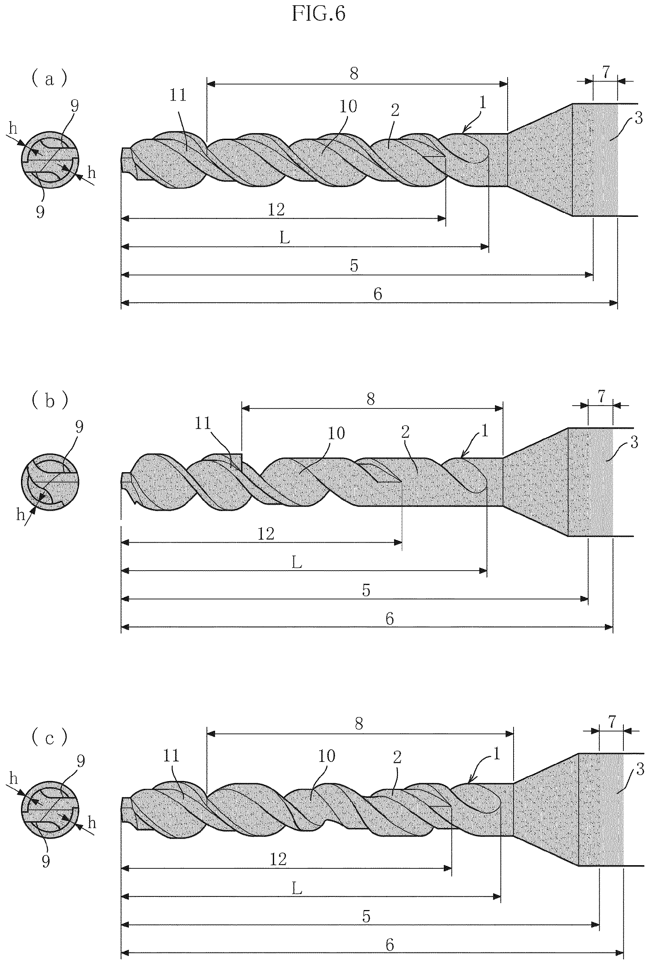

Specifically, as shown in FIG. 6(a), the PCB drill may be configured as a type of drill having a plurality of cutting blades 9, this type of drill being such that chip discharge grooves 10 having the same torsion angle as the cutting blades 9 are provided in the same number as the cutting blades 9, and recessed step surfaces 11 (second relieving surfaces) are provided to the outer-peripheral part of the drill along the chip discharge grooves 10 from the tip end of the tool toward the rear-end side of the tool. The drill shape in which the recessed step surfaces 11 are provided can be set to a discretionary configuration in accordance with the characteristics of the workpiece and the required tool quality; other than the type shown in FIG. 6(a), examples include types that have one cutting blade 9 and are provided with one chip discharge groove 10, such as is shown in FIG. 6(b), and types that have two cutting blades 9 and have a shape in which the torsion angle of one or both of two chip discharge grooves 10 is changed at a discretionary position from the tip end of the tool to thereby cause the grooves to converge, such as is shown in FIG. 6(c).

When a configuration is adopted in which a recessed step surface 11 is provided to the undercut drill, the depth h of the recessed step surface 11 is set so as to be greater than that of the undercut part 8 (the diameter of the rotation locus of the recessed step surface 11 is formed so as to be less than the diameter of the rotation locus of the outer-peripheral surface of the undercut part 8).

Thus, chips produced by processing enter a gap between the processing hole wall surface in the printed circuit board and the outer-peripheral part of the undercut part 8, and it is made easier to conduct electricity from the tip end of the tool to the electricity-conducting-region part 7 through the recessed step surface 11 even if the electroconductive film 3 is damaged.

In cases such as when the recessed step surface 11 is buried in the processing hole during processing, the electroconductive film 3 located on the outer-peripheral part of the undercut part 8 is damaged and less readily conducts electricity. Therefore, it is more preferable that the recessed-step length 12 is greater than the processing hole depth. For example, if the processing hole depth is 40% of the groove length L, then the recessed-step length 12 is to be set to a length greater than 40% of the groove length *L*, and if the processing hole depth is 75% of the groove length L, then the recessed-step length 12 is to be set to a length greater than 75% of the groove length L. The configuration of the recessed-step length 12 can be set with discretion.

As shown in FIG. 2, the electroconductive film 3 in the present example is provided so as to cover both the diamond film 2 with which the tool substrate 1 is clad and a part of the tool substrate 1 (substrate exposed part) that is not clad with the diamond film 2 and that is provided successively to the diamond film 2. However, the state of cladding with the electroconductive film 3 is not limited to that described in the present example; the cladding state employed can be subject to an appropriate design change, such as removing a part of the diamond film 2 with which the tool substrate 1 is clad and then providing the electroconductive film 3 so that the diamond film 2 and the exposed portion of the tool substrate 1 are continuously covered.

Because the present example is configured as described above, excellent cutting performance is maintained without any incidence of a reduction in processing quality, such as an increase in cutting resistance and shortening of breakage service life due to rounding of the edge of the cutting blade, or ruining of the inner wall surface of a processed hole due to a reduction in sharpness with respect to the workpiece, and production of burrs at the copper foil layer, despite the present example being configured so that the electroconductive film 3 is provided so that the diamond film 2 is clad therewith. Furthermore, there is provided a cutting tool (PCB drill) in which it is possible to electrically sense, in a satisfactory manner, contact between the tool substrate 1 and the copper foil on the surface of the printed circuit board that is the workpiece, it being possible to use the cutting tool in processing equipment provided with a hole-boring-depth control function for precisely managing hole boring depth (processing depth or distance from the surface of the printed circuit board) using electrical conductivity, and/or a breakage-sensing function for sensing whether the PCB drill has broken during processing by using electrical conductivity, and it being possible to provide a process (hole-boring process) for cutting a high-quality printed circuit board, despite the present example being configured so that the tool substrate 1 is clad with the diamond film 2.

An experiment (evaluation experiment) to substantiate the effect of the present example is described below.

In the present experiment, PCB drills according to each of experiment nos. 1 to 35, in which the film thickness of the diamond film 2, the material, composition, and film thickness of the electroconductive film 3, and the presence of each of the films were varied, were attached to processing equipment (NC drill press) provided with a breakage-sensing function for sensing whether the PCB drill has broken during processing by using electrical conductivity, and the PCB drills were evaluated as to the number of boring processes performed until erroneous sensing of breakage when hole-boring processes were performed on printed circuit boards. Next, PCB drills according to each of experiment nos. 36 to 42, in which the ratio of processed-hole depth to groove length L and the ratio of recessed-step length 12 to groove length L were varied, were also evaluated as to the number of boring processes performed until erroneous sensing of breakage. The present experiment is described below in detail.

The PCB drills used in the present experiment were created as described below.

A diamond film 2 was formed on a cemented-carbide tool substrate 1 (shank diameter: 3.175 mm, diameter: 0.3 mm), by using a hot-filament chemical vapor deposition device on the tool substrate 1, while H₂ gas, CH₄ gas, and O₂ gas were introduced so that the temperature of the tool substrate 1 was 650-800°C and so that the gas pressure was fixed. In order to simplify comparison of the film configurations of the diamond film 2, single-layer configurations were employed. A prescribed electroconductive film 3 was then formed, by using a physical vapor deposition device, so as to cover both the tool substrate 1 and the diamond film 2, the electroconductive film 3 being formed such that a metal or alloy target attached to a metal vapor source was used while Ar, N₂, and CH₄ gas were introduced so that the tool substrate 1 was heated to a temperature of 50-300°C and so that the gas pressure was fixed, and electrical discharge was induced using a current of 50-150 A. Specifically, the prescribed electroconductive film 3 was configured so as to span both the tool substrate 1 and the diamond film 2, and was formed so that the electroconductive film 3 with which the diamond film 2 was clad was in contact with the tool substrate 1.

Specifically, in the PCB drill according to, e.g., experiment no. 17, the diamond film 2 was formed by the hot-filament chemical vapor deposition device while the gas pressure was 500 Pa, the gas flow rate ratio H₂:CH₄:O₂ was 100:3:1, and the temperature of the tool substrate 1 was 700°C, after which the electroconductive film 3 was formed in an arc discharge ion plating device while Cr was used in a metal vapor source in a film formation device, the gas pressure of only Ar gas was set to 0.5 Pa, the bias voltage was -50 V, and the temperature of the tool substrate 1 was set to 200°C.

In the PCB drill according to experiment no. 28, the diamond film 2 was formed by the hot-filament chemical vapor deposition device while the gas pressure was 500 Pa, the gas flow rate ratio H₂:CH₄:O₂ was 100:1:0, and the temperature of the tool substrate 1 was 800°C, after which the electroconductive film 3 was formed in the arc discharge ion plating device while Cr₃₀Al₇₀ was used in the metal vapor source in the film formation device, the gas pressure of only Ar gas was set to 1.0 Pa, the bias voltage was -100 V, and the temperature of the tool substrate 1 was set to 150°C.

In the experiment (processing evaluation): a hole-boring process was performed using typical printed circuit boards as materials to be cut; and, for the number of instances of processing in which it was possible, by electrically sensing contact between the PCB drill and a copper foil layer on the surface of the printed circuit board, to avoid erroneous sensing that breakage had occurred in the PCB drill, a breakage-sensing function of the processing equipment was activated, and the number of instances of the hole processing operation until the equipment stopped due to a breakage alarm was evaluated as the "number of instances of hole processing until erroneous sensing of breakage."

Specifically: a hole-boring process was performed at a rotation speed of 100,000 min⁻¹ and a Z-direction feed speed of 1,500 mm/min; and an evaluation was made of the number of instances of the hole-boring operation until electrical conductivity could not be detected between the tip end of the PCB drill and the copper foil layer on the surface of the printed circuit board, at which point it was erroneously detected that breakage had occurred in the PCB drill.

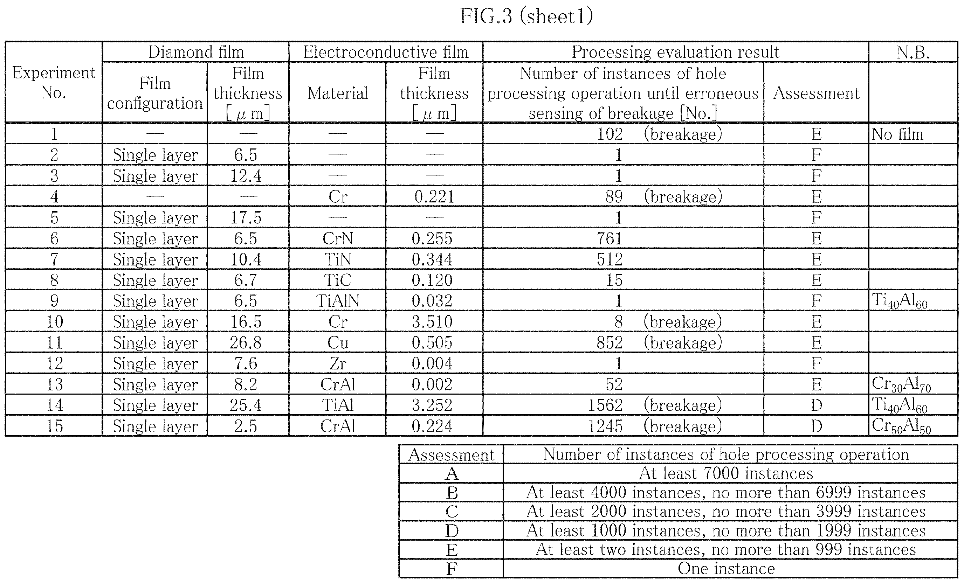

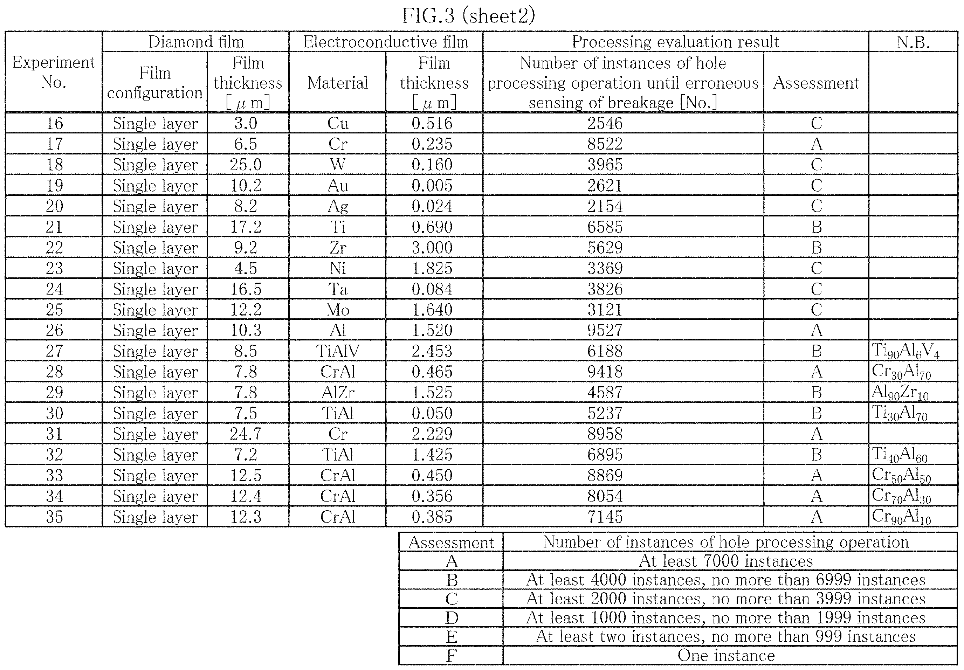

FIG. 3 is a table showing film conditions for the diamond films 2 and the electroconductive films 3 on the PCB drills, and respective evaluation results, in the present experiment.

The processing evaluation results shown in FIG. 3 are more favorable the higher the number of instances of the hole processing operation is. Specifically, the assessment of drills having an excellent result of at least 7,000 instances was designated by "A," that of drills having at least 4,000 instances but no more than 6,999 instances was designated by "B," that of drills having at least 2,000 instances but no more than 3,999 instances was designated by "C," that of drills having at least 1,000 instances but no more than 1,999 instances was designated by "D," that of drills having at least two instances but no more than 999 instances was designated by "E," and that of drills having one instance was designated by "F." For example, "1" is given as the "number of instances of hole processing operation until erroneous sensing of breakage" for experiment no. 2 in the table, meaning that conductivity could not be sensed by using the copper foil layer on the surface of the printed circuit board during processing of the first hole, and processing was stopped. In cases where a breakage alarm was generated due to breakage during processing rather than due to erroneous sensing, the term "(breakage)" is listed to the right of the "number of instances of hole processing operation until erroneous sensing of breakage." In the present experiment, experiments were also performed and listed for a PCB drill on which neither a diamond film 2 nor an electroconductive film 3 was formed (experiment no. 1), and a PCB drill clad with only the electroconductive film 3 (i.e., without a diamond film 2) (experiment no. 4).

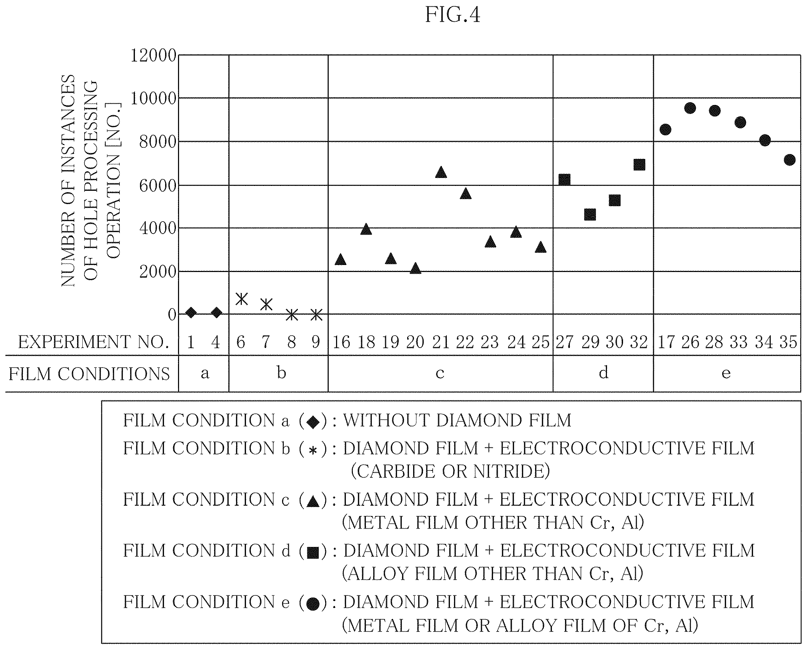

In the present experiment, the film conditions of the PCB drills can be broadly categorized into five film conditions, specifically: without the diamond film 2 (film condition a); with the diamond film 2, and the electroconductive film 3 is carbide or nitride (film condition b) ; with the diamond film 2, and the electroconductive film 3 is formed from a single metal other than Cr and Al (film condition c); with the diamond film 2, and the electroconductive film 3 is formed from an alloy having, as a main component, a metal element other than Cr and Al (film condition d) ; and with the diamond film 2, and the electroconductive film 3 is formed from Cr or Al as a single metal, or from an alloy of Cr and Al (film condition e). FIG. 4 is a graph in which the evaluation results in the present experiment are aggregated for each film condition.

From the results shown in FIGS. 3 and 4, it is suitable for the film thickness of the diamond film 2 to be 3-25 µm, inclusive.

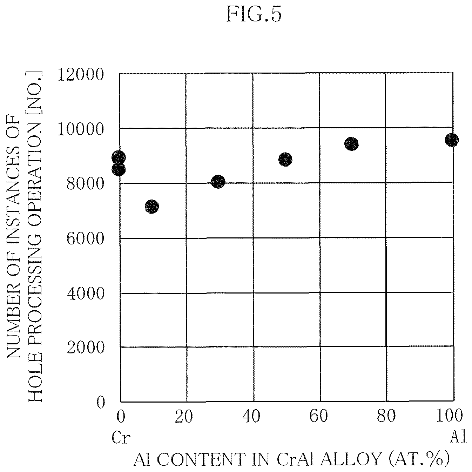

As pertains to the electroconductive film 3, the results under film condition e were the best, and therefore a film in which the material of the electroconductive film 3 is Cr or Al as a single metal, or an alloy of Cr and Al is suitable. A film in which this material is Al as a single metal, or an alloy represented by the compositional expression Cr₍₁₀₀₋ₓ₎Al₍ₓ₎ (where 50 ≤ x < 100, and x is in units of at.%), is more suitable. Furthermore, as shown in FIG. 5, suitability increases as the value of x increases, i.e., as the Al content increases. It is suitable for the film thickness of the electroconductive film 3 to be 0.005-3 µm, inclusive.

Next, PCB drills (shank diameter: 3.175 mm, diameter: 0.3 mm, groove length *L*: 5.0 mm) clad with diamond films 2 and, as electroconductive films 3, films of Al as a single metal, for which the number of instances of the hole processing operation until erroneous sensing of breakage was excellent, were used in examining the effect of the recessed-step length 12 on the number of instances of the hole processing operation until erroneous sensing of breakage.

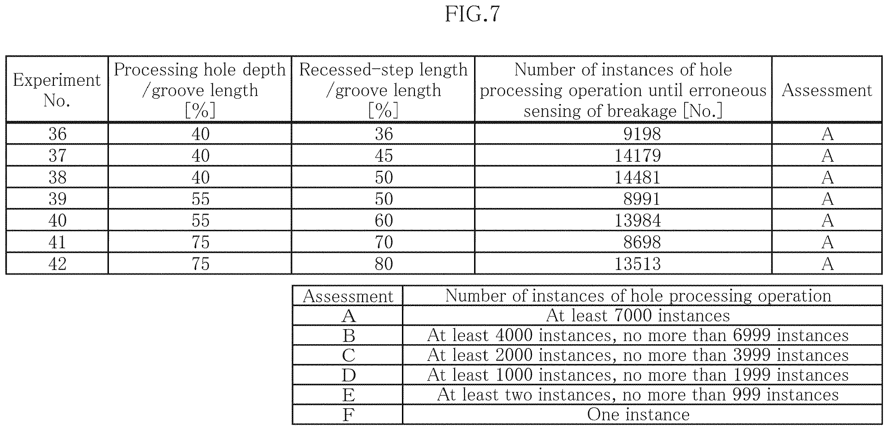

As shown in FIG. 7, among the PCB drills in which the ratio of the recessed-step length 12 to the groove length L was set at three levels (experiment nos. 36 to 38), the PCB drills in which the recessed-step length 12 was greater than the processing hole depth (experiment nos. 37 and 38) were less susceptible to erroneous sensing of breakage than the PCB drill in which the recessed-step length 12 was less than the processing hole depth (experiment no. 36).

In addition, results were obtained indicating that, among the PCB drills in which the ratio of the processing hole depth to the groove length *L* is increased further and the recessed-step length 12 is set at two levels in total (experiment nos. 39 to 42), the PCB drills in which the recessed step length 12 was greater than the processing hole depth were less susceptible to erroneous sensing of breakage, in the same manner.

From the results described above, the configuration of the recessed-step length 12 can be set with discretion, provided that the recessed-step length 12 is greater than the processing hole depth.

The present invention is not limited to the present example; the specific configuration of the configurational requirements can be designed as appropriate.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A cutting tool in which an electroconductive tool substrate is clad with a diamond film, wherein the cutting tool is **characterized in that** an electroconductive film is
provided to the diamond film at a site that will make contact with a workpiece or around the site so as to conduct
electricity with the tool substrate.

2. The cutting tool according to claim 1, wherein the cutting tool is **characterized in that** the electroconductive film is provided so as to cover the diamond film.

3. The cutting tool according to either of claims 1 or 2, wherein the cutting tool is **characterized in that** the electroconductive film is provided directly on the diamond film so as to cover the diamond film.

4. The cutting tool according to any of claims 1 to 3, wherein the cutting tool is **characterized in that** the electroconductive film is provided so as to cover the diamond film and the tool substrate.

5. The cutting tool according to any of claims 1 to 4, wherein the cutting tool is **characterized in that** the electroconductive film is a single metal selected from the group consisting of Al and metal elements belonging to groups 4, 5, 6, 10, and 11 of the periodic table, or is an alloy having, as a main component, one or two types of metal elements selected from the aforementioned group.

6. The cutting tool according to claim 5, wherein the cutting tool is **characterized in that** the electroconductive film is any of Ti, Cr, or Al as a single metal, or is an alloy having, as a main component, any one or two types among Ti, Cr, and Al.

7. The cutting tool according to claim 6, wherein the cutting tool is **characterized in that** the electroconductive film is formed from Cr or Al as a single metal, or from an alloy of Cr and Al.

8. The cutting tool according to claim 7, wherein the cutting tool is **characterized in that** the electroconductive film is Al as a single metal, or is an alloy represented by the following compositional expression.
Cr₍₁₀₀₋ₓ₎Al₍ₓ₎ (where 50 ≤ x < 100, and x is in units of at.%)

9. The cutting tool according to any of claims 1 to 8, wherein the cutting tool is **characterized in that** the film thickness of the diamond film is set to 3-25 µm, inclusive.

10. The cutting tool according to any of claims 1 to 9, wherein the cutting tool is **characterized in that** the film thickness of the electroconductive film on the diamond film is set to 0.005-3 µm, inclusive.

11. The cutting tool according to any of claims 1 to 10, wherein the cutting tool is **characterized in that** the tool substrate is made of cemented carbide, and the workpiece is a printed circuit board.

12. The cutting tool according to any of claims 1 to 11, wherein the cutting tool is **characterized by** performing a process to bore a hole in a printed circuit board.
